# EUROPEAN PATENT APPLICATION

(11) **EP 4 459 365 A1**
(43) Date of publication of application: **06.11.2024**
(21) Application number: 22916573.3
(22) Date of filing: 16.12.2022
(51) Int. Cl.: G02F 1/01, G02B 5/30, B60J 3/04, E06B 3/67

(54) **OPTICAL LAMINATE AND MANUFACTURING METHOD THEREFOR, SMART WINDOW COMPRISING SAME, AND AUTOMOBILE AND BUILDING WINDOW SYSTEMS USING SAME**

(30) Priority: 30.12.2021 KR 20210193171
(71) Applicant: Dongwoo Fine-Chem Co., Ltd., Iksan-si, Jeollabuk-do 54631 (KR)
(72) Inventor: KIM, Dong-Hwi, Iksan-si, Jeollabuk-do 54631 (KR); AHN, Hong-Jun, Iksan-si, Jeollabuk-do 54631 (KR); OH, Pyoung-Yun, Iksan-si, Jeollabuk-do 54631 (KR)
(74) Representative: Betten & Resch
(86) International application number: PCT/KR2022/020635
(87) International publication number: WO 2023/128431

(57) **Abstract**

The present invention relates to a variable transmittance optical laminate and a manufacturing method therefor, a smart window comprising same, and automobile and building window systems using same, the variable transmittance optical laminate comprising: a first laminate in which a first polarizing plate, a first transparent conductive layer, and a first alignment layer are sequentially laminated; a second laminate which faces the first laminate and in which a second polarizing plate, a second transparent conductive layer, and a second alignment layer are sequentially laminated; a liquid crystal layer disposed between the first laminate and the second laminate; and a sealant formed along the outer circumferential surface of the liquid crystal layer and sealing the liquid crystal layer, wherein at least one of the first transparent conductive layer or the second transparent conductive layer is in direct contact with one of the first polarizing plate or the second polarizing plate, the sealant includes a first region overlapping with at least one of the first alignment layer or the second alignment layer in a planar direction and a second region not overlapping with same, and the width of the first region is 5% to 70% of the sum of the width of the first region and the width of the second region.

## Description

### Technical Field

The present disclosure relates to a variable transmittance optical stack, a method for manufacturing the same, a smart window including the same, and windows and doors for a vehicle and a building employing the same.

### Background Art

In general, there are many cases in which an external light blocking coating is applied to a window of a means of transportation such as a vehicle. However, a transmittance of a conventional window of a means of transportation is fixed, and a transmittance of the external light blocking coating is also fixed. Therefore, the entire transmittance of the conventional window of the means of transportation is fixed, thereby causing an accident. For example, when the entire transmittance is preset low, there is no problem during day when ambient light is sufficient. However, there is a problem in that it is difficult for a driver or the like to properly check the surroundings of the means of transportation at night when ambient light is insufficient. Alternatively, when the entire transmittance is preset high, there is a problem of causing glare to a driver or the like during day when ambient light is sufficient. Accordingly, a variable transmittance optical stack capable of changing the transmittance of light when a voltage is applied has been developed.

The variable transmittance optical stack is driven by changing the transmittance by driving liquid crystal according to voltage application. The variable transmittance optical stack developed so far is manufactured by forming a conductive layer for driving liquid crystal on a separate or additional substrate, and then combining the conductive layer with other elements such as a polarizing plate.

For example, Japanese Patent Publication Application No. 2018-010035 discloses a variable transmittance optical stack including a transparent electrode layer formed on a polycarbonate (PC) substrate having a predetermined thickness.

However, when a separate or additional substrate is included to form the conductive layer as described above, as a manufacturing process becomes complicated, manufacturing costs is increased, the thickness of the laminate is increased, and the transmittance is changed due to the occurrence of retardation.

Furthermore, a sealant formed along an outer circumferential surface of a liquid crystal layer to seal the liquid crystal layer is formed on an alignment film for aligning liquid crystal compounds, so there is a problem in that an active region of the optical stack is reduced and boundary surface adhesion of the sealant deteriorates.

Therefore, the development of simplifying the manufacturing process of the optical stack, reducing the thickness thereof, and improving the active region of the optical stack and the boundary surface adhesion of the sealant is needed.

### Disclosure

### Technical Problem

The present disclosure is intended to provide a variable transmittance optical stack having a simplified manufactured process without a separate or additional substrate for forming a conductive layer.

Another objective of the present disclosure is to provide a variable transmittance optical stack having a thickness significantly reduced without a separate or additional substrate for forming a conductive layer.

Yet another objective of the present disclosure is to provide a variable transmittance optical stack having an improved transmittance thereof in a light transmissive mode without a separate or additional substrate for forming a conductive layer.

Still another objective of the present disclosure is to provide a variable transmittance optical stack having the improved active region by adjusting a ratio of a sealant region formed on an alignment film.

Still another objective of the present disclosure is to provide a variable transmittance optical stack having the improved boundary surface adhesion of a sealant by adjusting a ratio of a sealant region formed on an alignment film.

Still another objective of the present disclosure is to provide a smart window including the variable transmittance optical stack, and windows and doors for a vehicle or a building to which the same is applied.

However, the problem to be solved by the present disclosure is not limited to the problems mentioned above, and other problems not mentioned will be clearly understood by those skilled in the art from the description below.

### Technical Solution

The present disclosure relates to a variable transmittance optical stack including: a first stack in which a first polarizing plate, a first transparent conductive layer, and a first alignment film may be sequentially stacked; a second stack which faces the first stack, and in which a second polarizing plate, a second transparent conductive layer, and a second alignment film may be sequentially stacked; a liquid crystal layer disposed between the first stack and the second stack; and a sealant formed along an outer circumferential surface of the liquid crystal layer and sealing the liquid crystal layer, wherein at least one of the first and second transparent conductive layers may be formed in direct contact with one of the first and second polarizing plates, the sealant may include a first region overlapping with at least one of the first and second alignment films in a planar direction and a second region not overlapping with same, and the width of the first region may be 5% to 70% of the sum of the width of the first region and the width of the second region.

In a first aspect of the present disclosure, a sealant region corresponding to the first region may be a sealant region formed on at least one of the first and second alignment films, and a sealant region corresponding to the second region may not be formed on the first and second alignment films.

In a second aspect of the present disclosure, the sum of the width of the first region and the width of the second region may be the width of the sealant.

In a third aspect of the present disclosure, the width of the first region may be 0.1 mm to 3.0 mm.

In a fourth aspect of the present disclosure, an orthogonal transmittance of an active region which is measured from a boundary surface of an active region of the liquid crystal layer and the first region may be greater than or equal to 0 % and less than 3.0 %.

In a fifth aspect of the present disclosure, a peel strength of the sealant ranges from 100 mN/4mm to 500 mN/4mm.

In a sixth aspect of the present disclosure, at least one of the first and second transparent conductive layers may be formed in direct contact with either the first polarizing plate or the second polarizing plate without a separate or additional substrate between the transparent conductive layer and the polarizing plate.

In a seventh aspect of the present disclosure, at least one of the first and second transparent conductive layers may be formed in direct contact with either the first polarizing plate or the second polarizing plate with a highly adhesive layer between the transparent conductive layer and the polarizing plate.

In an eighth aspect of the present disclosure, at least one of the first and second transparent conductive layers may include one or more types selected from a group consisting of transparent conductive oxide, metal, carbonaceous material, conductive polymers, conductive ink, and nanowires.

In a ninth aspect of the present disclosure, at least one of the first and second polarizing plates may include one or more types of functional layers selected from a group consisting of a protective layer, a retardation matching layer, and a refractive index-matching layer.

In a tenth aspect of the present disclosure, at least one of the first and second polarizing plates has a thickness ranging from 30 to 200µm.

In an eleventh aspect of the present disclosure, the liquid crystal layer may include one or more types selected from a group consisting of a ball spacer and a column spacer.

In a twelfth aspect of the present disclosure, the ball spacer may have a diameter ranging from 1 to 10µm.

In a thirteenth aspect of the present disclosure, an occupancy area of the ball spacer in the liquid crystal layer may range from 0.01% to 10% of the area of the liquid crystal layer.

In a fourteenth aspect of the present disclosure, the variable transmittance optical stack may include: one or more types selected from a group consisting of an alignment film, a pressure sensitive adhesive/adhesive layer, an ultraviolet ray absorption layer, and a hard coating layer.

Furthermore, the present disclosure relates to a method for manufacturing the variable transmittance optical stack.

Furthermore, the present disclosure relates to a smart window including the variable transmittance optical stack.

Furthermore, the present disclosure relates to a vehicle in which the smart window may be applied to at least one of a front window, a rear window, a side window, a sunroof window, or an inner partition thereof.

Furthermore, the present disclosure relates to a window and a door for a building including the smart window.

### Advantageous Effects

Furthermore, the variable transmittance optical stack according to the present disclosure is formed without the process of forming a conductive layer on a substrate for forming the conventional optical stack and bonding it to other members, etc., so that the manufacturing process thereof can be simplified in comparison to the conventional optical stack.

The variable transmittance optical stack according to the present disclosure is formed without a separate or additional substrate for forming the conductive layer as the conductive layer is directly formed on one surface of the polarizing plate, so that the thickness thereof can be significantly reduced in comparison to the thickness of the conventional optical stack.

The variable transmittance optical stack according to the present disclosure is formed without a separate or additional substrate for forming the conductive layer as the conductive layer is directly formed on one surface of the polarizing plate, so that a transmittance in the light transmissive mode can be improved in comparison to the conventional optical stack.

Furthermore, the variable transmittance optical stack according to the present disclosure has an improved active region more than the conventional optical stack by adjusting a ratio of a sealant region formed on the alignment film.

Furthermore, the variable transmittance optical stack according to the present disclosure has the improved boundary surface adhesion of the sealant compared to the conventional optical stack by adjusting a ratio of the sealant region formed on the alignment film.

### Description of Drawings

FIG. 1 is a view showing a laminate structure of a variable transmittance optical stack according to an embodiment of the present disclosure.
FIGS. 2A to 2E are views each showing a laminate structure of a polarizing plate according to one or a plurality of embodiments of the present disclosure.
FIG. 3 is a view showing a section of a stack structure of the variable transmittance optical stack according to the embodiment of the present disclosure.
FIG. 4 is a plan view showing a sealant and an alignment film stacked with each other of the variable transmittance optical stack.
FIG. 5 is a view showing a stack structure of the variable transmittance optical stack according to another embodiment of the present disclosure.

### Best Mode

The variable transmittance optical stack of the present disclosure has a technical characteristic in which a transparent conductive layer for driving liquid crystal is directly formed on one surface of a polarizing plate without a separate or additional substrate for forming a conductive layer to reduce the thickness of the stack and improve the transmittance in a light transmissive mode. Furthermore, the variable transmittance optical stack has a technical characteristic in which a ratio of a sealant region formed on the alignment film is adjusted, so that an active region of the optical stack and boundary surface adhesion of the sealant are improved.

More specifically, the variable transmittance optical stack includes a first stack in which a first polarizing plate, a first transparent conductive layer, and a first alignment film are sequentially stacked; a second stack which faces the first stack and in which a second polarizing plate, a second transparent conductive layer, and a second alignment film are sequentially stacked; a liquid crystal layer disposed between the first stack and the second stack; and the sealant formed along an outer circumferential surface of the liquid crystal layer and sealing the liquid crystal layer, and at least one of the first and second transparent conductive layers is formed in direct contact with one of the first and second polarizing plates, the sealant includes a first region overlapping with at least one of the first and second alignment films in a planar direction and a the second region not overlapping with the same, and the width of the first region is 5% to 70% of the sum of the width of the first region and the width of the second region.

The variable transmittance optical stack of the present disclosure is particularly suitable for technical fields where light transmittance can be changed in response to application of voltage, for example, may be used for a smart window, etc.

In the present disclosure, the smart window may mean an optical structure controlling the amount of light or heat passing through the window by changing light transmittance in response to an electrical signal, and the present disclosure is not limited thereto. In other words, the smart window of the present disclosure is provided to be changed into a transparent, opaque, or translucent state by voltage and includes variable transmittance glass, lighting control glass, or smart glass, and is not limited thereto.

The smart window may be used as partitions for partitioning an internal space of vehicles and buildings or for protecting privacy, or as skylights arranged in openings of buildings, and may be used as highway signs, noticeboards, scoreboards, clocks, or advertising screens, and may be used to replace glass of a means of transportation, such as windows or sunroof windows of cars, buses, aircrafts, ships, or trains.

The variable transmittance optical stack of the present disclosure may also be used for the smart window of the various technical fields mentioned above, but since the conductive layer is directly formed in the polarizing plate, there is no need to include a separate or additional substrate for forming the conductive layer and the thickness thereof is thin and is advantageous in the flexuosity, so the optical stack of the present disclosure may be used to be particularly suitable for a smart window of a vehicle or a building. According to one or a plurality of embodiments, the smart window to which the variable transmittance optical stack of the present disclosure is applied may be used for front windows, rear windows, side windows, and sunroof windows of a vehicle, or windows and doors for a building, and the smart window may be used to not only an external light blocking use, but also an internal space partitioning use or a privacy protecting use such as an inner partition for a vehicle or a building.

Hereinbelow, embodiments of the present disclosure will be described in detail with reference to drawings. However, the following drawings accompanying this specification illustrate preferred embodiments of the present disclosure, and serve to further understand the technical idea of the present disclosure with the contents of the above-described invention. Therefore, the present disclosure should not be construed as being limited to matters described in the drawings.

Terms used in this specification are selected to describe embodiments and thus do not limit the present disclosure. In this specification, an element expressed in a singular form may be plural elements unless it is necessarily singular in the context. For example, "the polarizing plate" used in the specification may mean at least one polarizing plate of the first polarizing plate and the second polarizing plate, and "the polarizer" may mean at least one polarizer of the first polarizer and the second polarizer, and "the transparent conductive layer" may mean at least one transparent conductive layer of the first transparent conductive layer and the second transparent conductive layer, and "the alignment layer" may mean at least one alignment layer the first alignment layer and the second alignment layer.

As used herein, terms "comprise" and/or "comprising" do not mean exclusion of the presence or absence of one or more components, steps, movements and/or elements other than a component, a step, movement, and/or an element mentioned above. The same reference numerals are used throughout the specification to designate the same or similar elements.

Spatially relative terms "below", "lower surface", "lower portion", "above", "upper surface", "upper portion" may be used to easily describe the correlation between "one element or components" and "another element or other components", as shown in drawings. The spatially relative terms should be understood as terms including different directions of an element when being used or operated in addition to a direction shown in the drawings. For example, when an element shown in the drawings is turned over, the element described as being "below" or "lower" concerning another element may be placed "on" the another element. Accordingly, the exemplary term "below" may include both downward and upward directions. An element may be aligned in a different direction, and accordingly, the spatially relative terms may be interpreted according to alignment.

The "planar direction" used in this specification may be interpreted as a direction perpendicular to a polarizing plate and/or a transparent conductive layer, that is, a direction viewed from the user's view side.

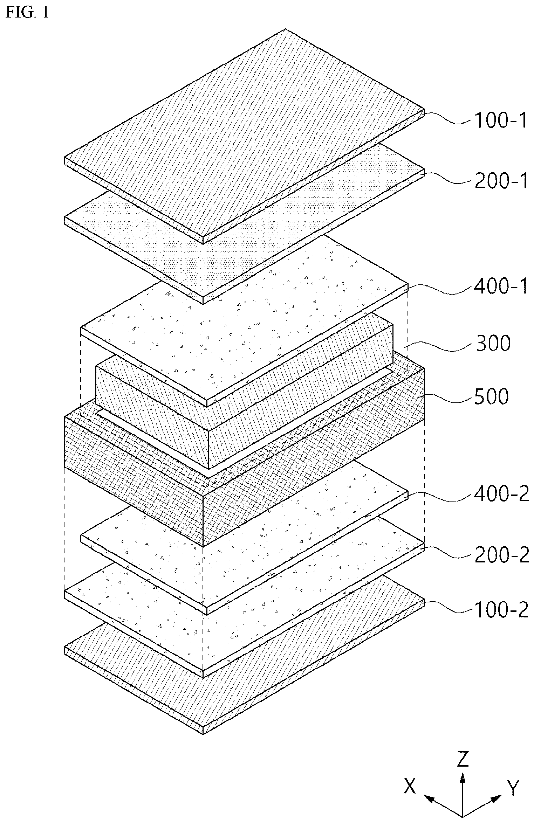

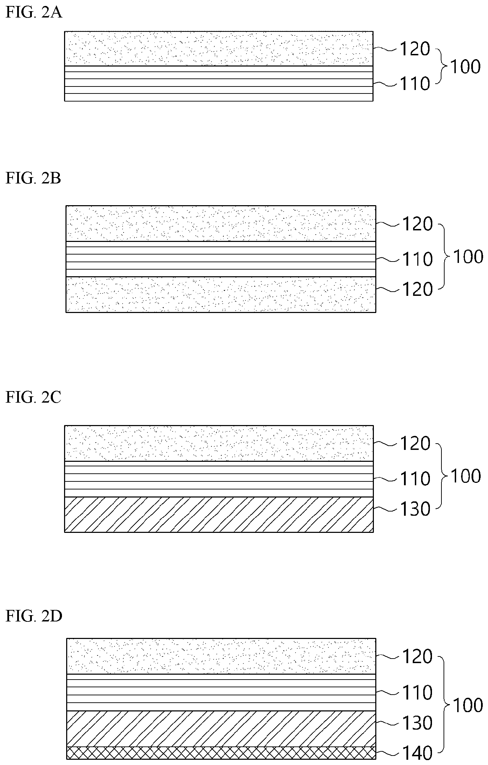

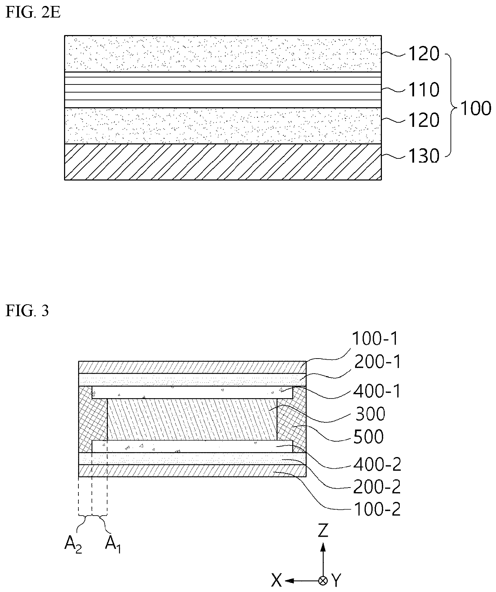

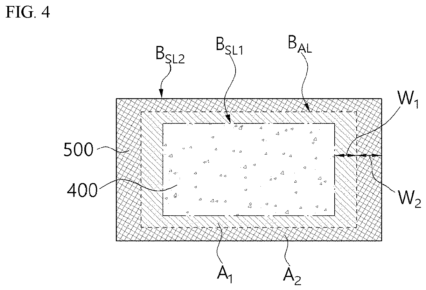

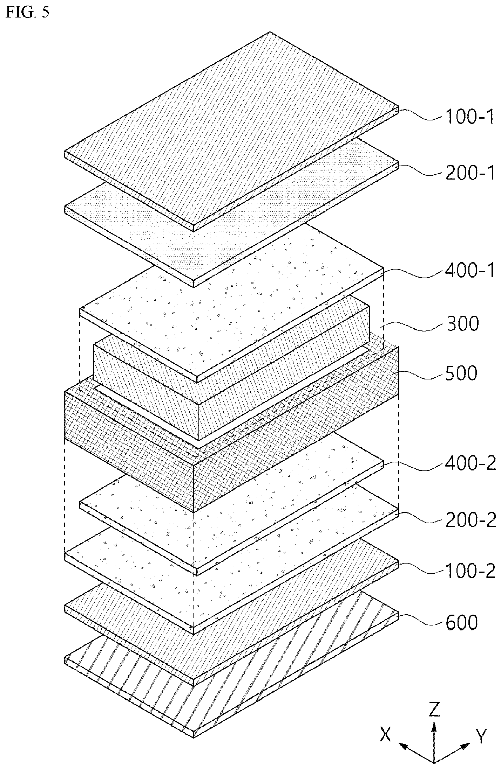

FIG. 1 is a view showing a stack structure of a variable transmittance optical stack according to an embodiment of the present disclosure. FIG. 2 is a view showing a stack structure of a polarizing plate according to one or a plurality of embodiments of the present disclosure. FIG. 3 is a view showing a section of a stack structure of the variable transmittance optical stack according to the embodiment of the present disclosure. FIG. 4 is a plan view showing a sealant and an alignment film stacked with each other of the variable transmittance optical stack. FIG. 5 is a view showing a stack structure of the variable transmittance optical stack according to another embodiment of the present disclosure.

Referring to FIG. 1, the variable transmittance optical stack according to the embodiment of the present disclosure includes a first polarizing plate 100-1, a second polarizing plate 100-2, a first transparent conductive layer 200-1, a second transparent conductive layer 200-2, and a liquid crystal layer 300.

Referring to FIG. 2, a polarizing plate 100 includes a polarizer 110 and may include functional layers such as a protective layer 120, a retardation matching layer 130, a refractive index-matching layer 140, etc. on one surface or both surfaces of the polarizer 110. For example, the polarizing plate 100 may include the polarizer 110 and the protective layer 120 stacked on one surface and both surfaces of the polarizer 110 (referring to FIGS. 2A and 2B), include the polarizer 110, the protective layer 120 stacked on a first surface or both surfaces of the polarizer 110, and the retardation matching layer 130 stacked on a second surface facing the first surface of the polarizer 110 (referring to FIG. 2C), include the polarizer 110, the protective layer 120 stacked on a first surface of the polarizer, the retardation matching layer 130 and the refractive index-matching layer 140 sequentially stacked on a second surface of the polarizer 110 which faces the first surface (referring to FIG. 2D), and include the polarizer 110, the protective layer 120 stacked on a first surface of the polarizer, and another protective layer 120 and the retardation matching layer 130 sequentially stacked on a second surface of the polarizer 110 which faces the first surface (referring to FIG. 2E).

The polarizer 110 may use a polarizer currently developed or to be developed, and, for example, may use a stretched polarizer, a coated polarizer, etc.

According to an embodiment, the stretched polarizer may contain a stretched polyvinyl alcohol (PVA)-based resin. The PVA-based resin may be PVA-based resin obtained by saponifying polyvinyl acetate resin. In addition to polyvinyl acetate that is homopolymer of vinyl acetate, vinyl acetate and a copolymer with other monomers that can be copolymerized with vinyl acetate may be used as the polyvinyl acetate-based resin. As the other monomers, unsaturated carboxylic acid-based monomers, unsaturated sulfonic acid-based monomers, olefin-based monomers, vinyl ether-based monomers, acrylamide having ammonium groups-based monomers, and the like may be used. Furthermore, the PVA-based resin contains a denatured resin, and for example, may be polyvinyl formal or polyvinyl acetal denatured into aldehyde.

According to an embodiment, the coated polarizer may be formed of a composition for liquid crystal coating, and, at this point, the composition for liquid crystal coating may contain reactive liquid crystal compound, dichroic dye, etc.

The reactive liquid crystal compound may mean a compound, for example, containing a mesogen frame, etc., and also containing one or more polymerizable functional groups. The reactive liquid crystal compound may be variously known by the name reactive mesogen (RM). The reactive liquid crystal compound may constitute a cured film with a polymer network formed while being polymerized by light or heat and maintaining a liquid crystal arrangement.

The reactive liquid crystal compound may be a mono-functional liquid crystal compound or a multi-functional liquid crystal compound. The mono-functional liquid crystal compound is a compound having 1 polymerizable functional group, and a multi-functional liquid crystal compound may mean a compound having two or more polymerizable functional groups.

The dichroic dye is a substance contained in the composition for liquid crystal coating to impart the polarization characteristic and has a characteristic in which absorbance in a direction of the long axis of a molecule and absorbance in a direction of the short axis are different. The dichroic dyes may be dichroic dyes currently developed or to be developed and may contain one or more types of dyes selected from a group consisting of azo dyes, anthraquinone dyes, perylene dyes, merocyanine dyes, azomethine dyes, phthaloperylene dyes, indigo dyes, dioxazine dyes, polythiophene dyes, and phenoxazine dyes.

The composition for liquid crystal coating may contain a solvent capable of dissolving the reactive liquid crystal compound and the dichroic dye. For example, propylene glycol monomethyl ether acetate (PGMEA), methyl ethyl ketone (MEK), xylene, chloroform, and the like may be used. Furthermore, the composition for liquid crystal coating may contain leveling agents, a polymerization initiator, etc. within a range that does not deteriorate the polarization characteristics of a coating film.

The protective layer 120 may be provided to preserve the polarization characteristic of the polarizer 110 from a post-processing and external environment and be implemented into a form such as a protective film, etc.

As shown in FIGS. 2A and 2B, the protective layer 120 may be formed in direct contact with one surface or both surfaces of the polarizer 110, but is not limited thereto. For example, the protective layer may be used in a double-layer structure in which one or more protective layers are successively stacked and may be formed in direct with one surface or both surfaces of another functional layer.

According to one or a plurality of embodiments, the protective layer 120 may include one or more types selected from a group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

The retardation matching layer 130 may be provided to complement the optical characteristics of the optical stack and may be implemented into a form of a retardation film, etc., and a retardation film, etc. currently developed or to be developed may be used therefor. For example, a quarter-wave plate (1/4 wave plate), a half-wave plate (1/2 wave plate), etc. may be used to delay the phase of light and may be used alone or in combination.

As shown in FIGS. 2C and 2D, the retardation matching layer 130 may be formed in direct contact with one surface of the polarizer 110, but is not limited thereto. For example, as shown in FIG. 2E, the retardation matching layer 130 is formed on one surface of the protective layer 120, and the polarizer 110, the protective layer 120, and the retardation matching layer 130 may be sequentially stacked.

The retardation matching layer 130 may be a polymer stretched film or a liquid crystal polymerized film, formed by stretching a polymer film that can impart optical anisotropy by stretching in an appropriate manner.

According to an embodiment, the polymer stretched film may use a polymer layer containing polyolefin such as polyethylene (PE), polypropylene (PP), etc., cyclo olefin polymer (COP) such as polynorbornene, etc., polyester such as polyvinyl chloride (PVC), polyacrylonitrile (PAN), polysulfone (PSU), acryl resin, polycarbonate (PC), polyethylene terephthalate (PET), etc.; and/or cellulose ester polymer such as polyacrylate, polyvinyl alcohol (PVA), triacetyl cellulose (TAC), etc., or a copolymer of two or more monomers among monomers that can form the polymers.

A method for obtaining the polymer stretched film is not particularly limited and, for example, may be obtained by forming the polymer material into a film shape and then stretching the material. The molding method for the film shape is not particularly limited, and the polymer stretched film may be formed in the known methods such as injection molding, sheet molding, blow molding, injection blow molding, inflation molding, extrusion molding, foaming molding, cast molding, etc., and may be formed in a secondary processing molding method such as pressure molding, vacuum molding, etc. Among them, extrusion molding and cast molding may be preferably used. At this point, for example, an unstretched film may be extruded by using an extruder to which a T-die, a circular die, etc., may be mounted. When a molded product is obtained in extrusion molding, a material made by melt-kneading various resin components, additives, etc., in advance, may be used and the molded product may be formed by melt-kneading during extrusion molding. Furthermore, various resin components are dissolved by using a common solvent, for example, a solvent such as chloroform, 2 methylene chloride, etc., and then are solidified in a cast dry manner, and accordingly, the non-stretched film may be cast-molded.

The polymer stretched film may be provided by performing uniaxial stretching with respect to the molded film in the mechanical direction (MD, longitudinal or length direction), and by performing uniaxial stretching in the direction (TD, transverse direction or width direction) perpendicular to the MD, and furthermore, the molded film is stretched in a sequential biaxial stretching method of roll stretching and tenter stretching, a simultaneous biaxial stretching method of tenter stretching, a biaxial stretching method of tubular stretching, etc., so that a biaxial stretched film may be manufactured.

The liquid crystal polymerized film may contain a reactive liquid crystal compound in a polymerized state. The description of the reactive liquid crystal compound of the coated polarizer described above may be equally applied thereto.

In one or a plurality of embodiments, when the retardation matching layer 130 is a polymer stretched film, the thickness thereof may be 10µm to 100µm, and when the retardation matching layer 130 is a liquid crystal polymerized film, the thickness thereof may be 0.1µm to 5µm.

The refractive index-matching layer 140 is provided to compensate for the refractive index difference of the optical stack by the transparent conductive layer 200, and may serve to improve the visible characteristic by reducing the difference of the refractive index. Furthermore, the refractive index-matching layer 140 may be provided to correct a color based on the transparent conductive layer 200. Meanwhile, when the transparent conductive layer has a pattern, the refractive index-matching layer 140 may correct the transmittance difference of a region with the pattern and a non-pattern region without the pattern.

Specifically, the transparent conductive layer 200 is laminated close to other members having a refractive index different therefrom (for example, the polarizer 110, etc.), and due to the difference of the refractive index between the transparent conductive layer and another layer close thereto, the difference of optical transmittance may be caused. Specifically, when the pattern is formed on the transparent conductive layer, there may be a problem in that the pattern region and the non-pattern region are visually distinguished from each other. Therefore, the refractive index-matching layer 140 is included to compensate for a refractive index, thereby reducing the difference with the optical transmittance of the optical stack. Specifically, when the pattern is formed on the transparent conductive layer, the pattern region and the non-pattern region should be provided so as not to be visually distinguished.

According to the embodiment, the refractive index of the refractive index-matching layer 140 may be appropriately selected according to a material of another adjacent member and may be preferably between 1.4 and 2.6, more preferably may be between 1.4 and 2.4. In this case, it is possible to prevent optical loss due to a sharp difference in the refractive index between another member such as the polarizer 110 and the transparent conductive layer 200.

The refractive index-matching layer 140 is not particularly limited as long as it can prevent the sharply refractive difference between other members, such as the polarizer 110, etc., and the transparent conductive layer, and may use a compound used in the formation of a refractive index-matching layer currently developed or to be developed. For example, the refractive index-matching layer 150 may be formed from refractive index-matching layer formation composition containing polymerizable isocyanate compound.

According to the embodiment, the polarizing plate 100 may include other functional layers to assist or strengthen the characteristics of the polarizer in addition to the above-mentioned functional layers and, for example, may include an overcoat layer, etc. to further improve the mechanical durability.

According to one or a plurality of embodiments, the polarizing plate 100 may have a thickness ranging from 30 to 200 µm, and preferably, a thickness ranging from 30 to 170 µm, and more particularly, a thickness ranging from 50 to 150 µm. In this case, while the polarizing plate 100 maintains the optical characteristic, the optical stack having a thin thickness can be manufactured.

The transparent conductive layer 200 is provided to drive the liquid crystal layer 300, and may be formed by directly contacting with the polarizing plate 100. For example, as shown in FIG. 1, the first transparent conductive layer 200-1 and the second transparent conductive layer 200-2 may be respectively formed by directly contacting with the first polarizing plate 100-1 and the second polarizing plate 100-2.

Conventionally, an optical stack used to manufacture a smart window, etc. is manufactured by forming a conductive layer for driving a liquid crystal on one surface of a substrate and bonding-coupling a second surface of the substrate to a polarizing plate. However, according to the present disclosure, the variable transmittance optical stack has the conductive layer directly formed on one surface of the polarizing plate without a separate or additional substrate for forming the conductive layer, and thus is characterized to improve the transmittance in a light transmissive mode and the curvature characteristic while reducing the entire thickness of the laminate.

According to the embodiment, the transparent conductive layer 200 may be formed by being directly deposited on one surface of the polarizing plate 100. At this point, in order to improve the adhesion between the transparent conductive layer 200 and the polarizing plate 100, the transparent conductive layer 200 may be formed by performing pre-processing such as a corona processing or a plasma processing on one surface of each polarizing plate 100, and then directly contacting with the surface of each polarizing plate 100 to which the pre-processing is performed. The pre-processing is not limited to the corona processing or the plasma processing, and may be a pre-processing method currently developed or to be developed without harming the purpose of the present disclosure.

According to another embodiment of the present disclosure, in order to improve the adhesion between the transparent conductive layer 200 and the polarizing plate 100, the transparent conductive layer 200 may be formed by directly contacting with each polarizing plate with the highly adhesive layer (not shown) located therebetween, the highly adhesive layer being provided on one surface of each polarizing plate 100.

The transparent conductive layer 200 is preferably have the transmittance with respect to visible light of 50% or more, and for example, may include one or more types selected from a group consisting of transparent conductive oxide, metal, a carbonaceous material, conductive polymer, conductive ink, and nanowires, but the present disclosure is not limited thereto, and a material of a transparent conductive layer currently developed or to be developed later may be used.

According to one or a plurality of embodiments, the transparent conductive oxide may include one or more types selected from a group consisting of indium tin oxide (ITO), indium zinc oxide (IZO), indium zinc tin oxide (IZTO), aluminum zinc oxide (AZO), gallium zinc oxide (GZO), florin tin oxide (FTO), zinc oxide (ZnO), etc. Furthermore, the metal may include one or more types selected from a group consisting of aurum (Au), argentum (Ag), cuprum (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), alloy containing at least one of them, etc., and for example, may include argentum - palladium - cuprum (APC) alloy or cuprum - calcium (CuCa) alloy. The carbonaceous matter may include one or more types selected from a group consisting of carbon nanotube (CNT), graphene, etc., and the conductive polymer may include one or more types selected from a group consisting of polypyrrole, polythiophene, polyacetylene, PEDOT, polyaniline, etc. The conductive ink may be a mixture of metal powder and curable polymer binder, and the nanowires may be for example silver nanowires (AgNW).

Furthermore, the transparent conductive layer 200 may be formed by combining the above-described substances in a structure of two or more layers. For example, in order to reduce the reflectance of incident light and increase the transmittance, the transparent conductive layer may be formed in a structure of two layers including a metal layer and a transparent conductive oxide.

The transparent conductive layer 200 may be formed in a method commonly used in the art and, for example, may be formed using a coating process such as a spin coating method, a roller coating method, a bar coating method, a dip coating method, Gravure coating method, a curtain coating method, a dye coating method, a spray coating method, a doctor coating method, a kneader coating method, etc.; a printing process such as a screen printing method, a spray printing method, an inkjet printing method, a letterpress method, an intaglio printing method, a lithography method, etc.; and a deposition process such as chemical vapor deposition (CVD), physical vapor deposition (PVD), plasma enhanced chemical vapor deposition (PECVD), etc.

The liquid crystal layer 300 may adjust transmittance of light incident in one or a plurality of directions according to electric fields to change a driving mode of the optical stack.

The liquid crystal layer 300 may include crystal liquid compounds and, for example, may be provided between the first alignment film 400-1 and the second alignment film 400-2 in an optical control region, and may located in a space provided by the sealant 500 and a spacer (not shown), the sealant 500 being formed along an outer circumferential surface of the liquid crystal layer 300 and sealing the liquid crystal layer 300.

The liquid crystal compounds are operated in response to electric fields and is not particularly limited as long as it can control transmittance of light, and liquid crystal compounds developed before and after may be used and, for example, the description of reactive liquid crystal compound of the above-mentioned polarizer may be equally applied thereto.

A liquid crystal movement method of the liquid crystal layer 300 is not particularly limited and, for example, a twisted nematic (TN) mode, a super twisted nematic (STN) mode, a vertical alignment (VA) mode, etc. may be used.

The alignment film 400 is not particularly limited as long as it adds the orientation to the liquid crystal compounds. For example, the alignment film 400 may be manufactured by coating and curing an alignment film coating composition containing aligned polymers, a photopolymerization initiator, and a solvent. Although the aligned polymer is not particularly limited, the aligned polymer may be polyacrylate-based resin, polyamic resin, polyimide-based resin, polymer having cinnamate groups, etc. and use polymer capable of expressing orientation, the polymer being currently developed or to be developed.

The sealant 500 may contain curable resins as base resins. As the base resins, UV curable resins or heat curable resins that are known to be usable for sealants in the art may be used. The ultraviolet curable resins may be polymers of UV curable monomers. The heat-curable resins may be polymers of heat-curable monomers.

As the base resins of the sealant 500, for example, acrylate-based resins, epoxy-based resins, urethane-based resins, phenol-based resins, or compounds of these resins may be used. According to an embodiment, the base resins may be acrylate-based resins, and the acrylate-based resins may be polymers of acrylic monomers. For example, the acrylic monomers may be multifunctional acrylate. According to another embodiment, the sealant may contain monomer substances in addition to the base resins. For example, the monomer substances may be monofunctional acrylate. In the specification, the monofunctional acrylate may mean compounds having one acryl group, and the multifunctional acrylate may mean compounds having two or more acryl groups. The curable resins may be cured by UV irradiation and/or heating. The UV irradiation condition or heat condition may be performed appropriately within the scope that does not damage the objective of the present disclosure. In case of need, the sealant may contain an initiator, for example, an optical initiator or a heat initiator.

The sealant 500 may be provided in a method commonly used in the art and, for example, may be formed drawing a sealant at an outer portion of the liquid crystal layer (i.e., inactivate region) with a dispenser having a nozzle.

In the embodiment, the sealant 500 may be provided, in at least a partial region, without the alignment film 400.

In the embodiment, as shown in FIG. 3, the sealant 500 may include a first region A₁ formed on the alignment film 400 and a second region A₂ not formed on the alignment film 400, for example, formed on the transparent conductive layer 200 as shown in FIG. 3. In this case, there is an advantage in terms of improving the active region of the optical stack and improving the adhesion between the sealant and the boundary surface.

In the embodiment, the width of the first region may be 5% to 70% of the sum of the width of the first region and the width of the second region, more preferably, may be less than or equal to 50%. In this case, the active region of the optical stack and the adhesion between the sealant and the boundary surface may be further improved.

Hereinbelow, the width of the first region and the width of the second region will be described as follows.

Specifically, referring to FIG. 4, the variable transmittance optical stack according to FIG. 3 may be interpreted to include, in a planar direction, (i) the alignment film 400 of a region surrounded by an alignment film boundary B_{AL}; and (ii) the sealant 500 of a region surrounded by a first sealant boundary B_{SL1} and a second sealant boundary B_{SL2}.

Thus, the region A₁ where the alignment film 400 and the sealant 500 overlap with each other in the planar direction may correspond to the first region A₁. The region A₂ where the alignment film 400 and the sealant 500 do not overlap with each other may correspond to the second region A₂.

At this point, the width W₁ of the first region may be defined as the distance between the first sealant boundary B_{SL1} and the alignment film boundary B_{AL}, and the width W₂ of the second region may be defined as a distance between the alignment film boundary B_{AL} and the second sealant boundary B_{SL2}.

In the embodiment, the width W₁ of the first region may be 0.1 mm to 3.0 mm and, in this case, the active region of the optical stack and the adhesion between the sealant and the boundary surface may be improved.

In the embodiment, the width of the first region A₁ formed between the first alignment film 400-1 and the sealant 500 and the width of the first region A₁ formed between the second alignment film 400-2 and the sealant 500 may be substantially the same, but is not necessarily limited thereto. For example, the width of the first region formed between the first alignment film and the sealant and the width of the first region formed between the second alignment film and the sealant may be different from each other. In this case, the width of the first region implied in the present disclosure may be a larger value of the width of the first region formed between the first alignment film and the sealant and the width of the first region formed between the second alignment film and the sealant.

The spacer may include at least one or more spacers among a ball spacer and a column spacer, and specifically, may preferably be a ball spacer. The ball spacer may include one or more ball spacers and preferably has a diameter ranged from 1 to 10 µm. Furthermore, when viewed in the planar direction, a region where the ball spacer is occupied in the liquid crystal layer 300 is preferably 0.01 to 10% of the area of the liquid crystal layer 300 in an aspect of improvement of user's visibility and transmittance in a light transmissive mode.

The variable transmittance optical stack of the present disclosure may include other members without affecting the objectives of the present disclosure and, for example, may include the pressure-sensitive adhesive/adhesive layer 600 (referring to Fig. 5) and may include an ultraviolet ray absorption layer, a hard coating layer, etc.

The pressure-sensitive adhesive/adhesive layer 600 may be formed using an adhesive or a pressure-sensitive adhesive, and have appropriate pressure sensitive adhesion/adhesion to prevent peeling, bubbles, etc. from occurring when handling the optical stack, and preferably have transparency and thermal stability.

The adhesive may be an adhesive currently developed or to be developed, for example, may use photocurable adhesive.

The photocurable adhesive provides strong adhesion by being crosslinked and cured by receiving active energy rays such as ultraviolet (UV), electron beam (EB), etc., and may be composed of reactive oligomers, reactive monomers, a photopolymerization initiator, and the like.

The reactive oligomers are important components that determine the characteristics of adhesive, and form polymer binding by photopolymerization to form a cured film. For example, the available oligomers may be polyester-based resin, polyether-based resin, polyurethane-based resin, epoxy-based resin, polyacryl-based resin, silicon-based resin, and the like.

The reactive monomers may serve as crosslinker, diluent of the reactive oligomers described above, and affect adhesion characteristics. For example, the available reactive monomers may be monofunctional monomers, multifunctional monomers, epoxy-based monomers, vinyl ethers, cyclic ethers, and the like.

The photopolymerization initiator may absorb light energy to generate radicals or cations to initiate photopolymerization, and a proper type may be selected and used depending on photopolymerization resin.

The pressure-sensitive adhesive may use a pressure-sensitive adhesive currently developed or to be developed. According to one or a plurality of embodiments, as the pressure-sensitive adhesive, acryl-based pressure-sensitive adhesive, rubber-based pressure-sensitive adhesive, silicon-based pressure-sensitive adhesive, urethane-based pressure-sensitive adhesive, polyvinyl alcohol-based pressure-sensitive adhesive, polyvinyl pyrrolidone-based pressure sensitive adhesive, polyacrylamide-based pressure sensitive adhesive, cellulose-based pressure sensitive adhesive, vinylalky ether-based pressure sensitive adhesive and the like. The pressure-sensitive adhesive is not particularly limited as long as it has pressure-sensitive adhesion and viscoelasticity. For ease of acquisition, preferably, the pressure-sensitive adhesive may include acryl-based pressure-sensitive adhesive, for example, may be (meth) acrylate copolymers, crosslinkers, solvents, and the like.

The crosslinkers may be crosslinkers currently developed or to be developed and, for example, polyisocyanate compounds, epoxy resins, melamine resins, urea resins, dialdehydes, methylol polymers, etc., and may preferably contain polyisocyanate compounds.

The solvents may include common solvents used in the field of resin compositions. For example, the solvents may use solvents such as: alcohol-based compounds such as methanol, ethanol, isopropanol, butanol, propylene glycol methoxy alcohol, and the like; ketone-based compounds such as methyl ethyl ketone, methyl butyl ketone, methyl isobutyl ketone, diethyl ketone, dipropyl ketone, and the like; acetate-based compounds such as methyl acetate, ethyl acetate, butyl acetate, propylene glycol methoxy acetate, and the like; cellosolve-based compounds such as methyl cellosolve, ethyl cellosolve, propyl cellosolve, etc.; hydrocarbon-based compounds such as hexane, heptane, benzene, toluene, xylene, and the like. The solvents may be used alone or combination of two or more types.

The thickness of the pressure sensitive adhesive/adhesive layer 500 may be appropriately determined depending on a type of resins serving as the pressure sensitive adhesive/adhesive, the strength of the pressure sensitive adhesive/adhesive, the environment where the pressure sensitive adhesive/adhesive is used, and the like. According to an embodiment, the pressure sensitive adhesive/adhesive layer may have a thickness ranging from 0.01 to 50µm in order to ensure sufficient adhesion and minimize the thickness of the optical stack and, preferably, may have a thickness ranging from 0.05 to 20µm and, more preferably, may have a thickness ranging from 0.1 to 10µm.

The ultraviolet ray absorption layer is not particularly limited as long as it is to prevent deterioration of the optical stack due to UV rays. For example, the ultraviolet ray absorption layer may use salicylic acid-based ultraviolet absorber (phenyl salicylate, p-tert-butyl salicylate, etc.), benzophenone-based ultraviolet absorber(2,4-dihydroxybenzophenone, 2,2'-dihydroxy-4,4'-dimethoxybenzophenone, etc.), benzotriazole-based ultraviolet absorber (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimide methyl)-5'-methylphenyl)benzotriazole, 2,2-methylenebis(4-(1,1,3,3-tetramethylbutyl)-6-(2H-benzotriazole-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxicarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazole-2-yl)-6-(linear and side chain dodecyl)-4-methylphenol, octyl-3-[3-tert-butyl-4-hydroxy-5-(chloro-2H-benzotriazole-2-yl)phenyl]propionate and 2-ethylhexyl-3-[3-tert-butyl-4-hydroxy-5-(5-chloro-2H-benzotriazole-2-yl)phenyl]propionate compounds, etc.), cyanoacrylate-based ultraviolet absorber(2'-ethylhexyl-2-cyano-3,3-diphenylacrylate, ethyl-2-cyano-3-(3',4'-methylene dioxyphenyl)-acrylate, etc.), triazine-based ultraviolet absorber, etc. The benzotriazole-based ultraviolet absorber or the triazine-based ultraviolet absorber that have high transparency and the excellent effect of preventing deterioration of the polarizing plate or the variable transmittance layer may be preferably used as the ultraviolet ray absorption layer, and the benzotriazole-based ultraviolet absorber having more appropriate spectral absorption spectroscopy absorption spectrum may be preferable. The benzotriazole-based ultraviolet absorber may be changed into "-Bis" and, for example, may be 6,6'-methylene bis (2-(2H-benzo[d][1,2,3]triazole-2-yl)-4-(2,4,4-trimethylpentane-2-yl)phenol), 6,6'-methylene bis (2-(2H-benzo[d][1,2,3]triazole-2-yl)-4-(2-hydroxyethyl)phenol), etc.

The hard coating layer is not particularly limited as long as it is able to protect members such as the polarizing plate, the variable transmittance layer, etc. from external physical and chemical shocks, and hard coating layers currently developed or to be developed may be used thereto.

According to the embodiment, the hard coating layer may be formed by applying compositions for forming a hard coating layer on another member and then curing the layer with light or heat. The compositions for forming a hard coating layer are not particularly limited and, for example, may include photocurable compounds and a photoinitiator.

As the photocurable compounds and the photoinitiator, those commonly used in the art can be used without limitation, for example, the photocurable compounds may be photopolymerizable monomers, photopolymerizable oligomers, etc., for example, may be monofunctional and/or multifunctional (meth) acrylate, and the photoinitiator may be an oxime ester-based photoinitiator, etc.

In addition to the variable transmittance optical stack, the present disclosure includes a smart window including the same. Furthermore, the present disclosure includes a vehicle in which the smart window is applied to at least one of front windows, rear windows, side windows, sunroof windows, and inner partitions, and a building window including the smart window.

### Mode for Invention

Hereinbelow, an embodiment of the present disclosure will be described in detail. However, the present disclosure may not be limited to embodiments disclosed below and may be implemented in various shapes, and the embodiments merely ensure that the present disclosure of the present disclosure is complete and is provided to fully inform those skilled in the art of the scope of the invention, and may be defined by the scope of the claims.

### Examples and Comparative examples: Manufacturing of optical stack

According to the widths of the first region listed in Table 1, the variable transmittance optical stack of the examples and comparative examples having the stack structure of the first stack (the first polarizing plate/the first transparent conductive layer/the first alignment film)/the liquid crystal layer (including the sealant)/the second stack (the second alignment film/the second transparent conductive layer/the second polarizing plate) is made. The sealant with 4mm width is formed by using the sealant UVF006 (made by SEKISUI Co., ltd.) through a sealant dispenser device, SHOTmino 200Sx (made by Musashi Engineering Ltd.).

At this point, the width of the first region is expressed with 100 % of the sum of the width of the first region and the width of the second region.

**[Table 1]**

| | Width of first region between first alignment film and sealant | Width of first region between second alignment film and sealant |
|---|---|---|
| Example 1 | 5 % | 5 % |
| Example 2 | 30 % | 30 % |
| Example 3 | 50 % | 50 % |
| Example 4 | 70 % | 70 % |
| Comparative example 1 | 0 % | 0 % |
| Comparative example 2 | 100 % | 100 % |

### Experimental example (1): Test of sealant peel strength

A sealant peel strength may be measured by a tensile testing machine, AG-X 1kN (made by SHIMAZDU Corporation).

Specifically, the optical stack according to each of the examples and comparative examples is cut to have a 25mm width and a 150mm entire length to make a test piece.

Thereafter, the first stack of the test piece is fixed to the upper portion of the upper and lower jig of the tensile testing machine, and the second stack is fixed to the lower portion.

Thereafter, the peel-off test is performed at 300 mm/min in a 180° peel-off method, and then the average peel strength of 30 to 120 mm sealant peeling section is measured, and the test results are described in Table 2.

### Experimental example (2): Test of orthogonal transmittance

A spectrum colorimeter (CM-3700d, Konica Minolta Inc.) is used to measure orthogonal transmittance (%).

Specifically, a sealant line of the optical stack according to each of the examples and comparative examples is aligned to be located on a central position of the sensor. A measured area is adjusted within a range of the liquid crystal layer active region of the sealant boundary. Then the orthogonal transmittance is measured, and the test results are described in Table 2.

**[Table 2]**

| | Sealant peel strength [mN/4mm] | Orthogonal transmittance of liquid crystal layer active region adjacent to sealant boundary |
|---|---|---|
| Example 1 | 451 | 0.1 % |
| Example 2 | 246 | 0 % |
| Example 3 | 121 | 0 % |
| Example 4 | 102 | 0 % |
| Comparative example 1 | 515 | 3.0 % |
| Comparative example 2 | 89 | 0 % |

Referring to Table 2, in the optical stacks of the examples 1 to 4 in which a ratio of the width of the first region to the sum of the width of the first region and the width of the second region satisfies 5 % to 70 %, the sealant peel strength is good with 102 to 451 mN/4mm. In addition, the orthogonal transmittance of the active region of the liquid crystal layer adjacent to the sealant boundary (i.e., the orthogonal transmittance of the active region which is measured from the boundary surface of the active region of the liquid crystal layer and the first region) is 0 % or 0.1 %, and it is understood that the orthogonal transmittance is substantially 0 %.

Meanwhile, in the optical stack of the comparative example 1 in which a ratio of the width of the first region to the sum of the width of the first region and the width of the second region is 0 % (i.e., a region where the alignment film and the sealant overlap with each other does not substantially exist), the orthogonal transmittance of the active region of the liquid crystal layer adjacent to the sealant boundary (i.e., the orthogonal transmittance of the active region which is measured from the boundary surface of the active region of the liquid crystal layer and the first region) is 3.0 %, and it is understood that side light leakage may partially occur compared to the examples 1 to 4.

Furthermore, in the optical stack of the comparative example 2 in which a ratio of the width of the first region to the sum of the width of the first region and the width of the second region is 100 % (i.e., the sealant is formed on the alignment film), the sealant peel strength is 89 mN/4mm, and it is understood that the boundary surface adhesion of the sealant may deteriorate compared to the examples 1 to 4.

Therefore, the optical stack according to the present disclosure has the sealant peel strength which is equal to or greater than 100 mN/4mm, more preferably, is 100 mN/4mm to 500 mN/4 mm. Furthermore, the optical stack has the orthogonal transmittance of the liquid crystal layer active region adjacent to the sealant boundary (i.e., the orthogonal transmittance of the active region is measured from the boundary surface between the active region of the liquid crystal layer and the first region) which is greater than or equal to 0 % and less than 3.0 %, more preferably, 0 % or substantially 0 %. Accordingly, it is understood that the active region of the liquid crystal layer and the boundary surface adhesion of the sealant are further improved.

Meanwhile, when the orthogonal transmittance is "substantially 0 %", the orthogonal transmittance is not limited to the orthogonal transmittance which is completely 0 %, and is within a measurement error range even when it is greater than 0 %, and may include a range where the orthogonal transmittance may be regarded as almost 0 % (e.g., the orthogonal transmittance is equal to or less than 0.1 %).

### Industrial Application

For the variable transmittance optical stack according to the present disclosure, the process in which a conductive layer is formed on a substrate and is bonded to other members to manufacture the conventional optical stack may be omitted, so the manufacturing process of the present disclosure can be simplified compared to the conventional optical stack.

## Claims

1. A variable transmittance optical stack comprising:
a first stack in which a first polarizing plate, a first transparent conductive layer, and a first alignment film are sequentially stacked;
a second stack which faces the first stack, and in which a second polarizing plate, a second transparent conductive layer, and a second alignment film are sequentially stacked;
a liquid crystal layer disposed between the first stack and the second stack; and
a sealant formed along an outer circumferential surface of the liquid crystal layer and sealing the liquid crystal layer,
wherein at least one of the first and second transparent conductive layers is formed in direct contact with one of the first and second polarizing plates,
the sealant includes a first region overlapping with at least one of the first and second alignment films in a planar direction and a second region not overlapping with same, and
the width of the first region is 5% to 70% of the sum of the width of the first region and the width of the second region.

2. The variable transmittance optical stack of claim 1, wherein a sealant region corresponding to the first region is a sealant region formed on at least one of the first and second alignment films, and
a sealant region corresponding to the second region is not formed on the first and second alignment films.

3. The variable transmittance optical stack of claim 1, wherein the sum of the width of the first region and the width of the second region is the width of the sealant.

4. The variable transmittance optical stack of claim 1, wherein the width of the first region is 0.1 mm to 3.0 mm.

5. The variable transmittance optical stack of claim 1, wherein an orthogonal transmittance of an active region which is measured from a boundary surface of an active region of the liquid crystal layer and the first region is greater than or equal to 0 % and less than 3.0 %.

6. The variable transmittance optical stack of claim 1, wherein a peel strength of the sealant ranges from 100 mN/4mm to 500 mN/4mm.

7. The variable transmittance optical stack of claim 1, wherein at least one of the first and second transparent conductive layers is formed in direct contact with either the first polarizing plate or the second polarizing plate without an additional substrate between the transparent conductive layer and the polarizing plate.

8. The variable transmittance optical stack of claim 1, wherein at least one of the first and second transparent conductive layers is formed in direct contact with either the first polarizing plate or the second polarizing plate with a highly adhesive layer between the transparent conductive layer and the polarizing plate.

9. The variable transmittance optical stack of claim 1, wherein at least one of the first and second transparent conductive layers comprises one or more types selected from a group consisting of transparent conductive oxide, metal, carbonaceous material, conductive polymers, conductive ink, and nanowires.

10. The variable transmittance optical stack of claim 1, wherein at least one of the first and second polarizing plates comprises one or more types of functional layers selected from a group consisting of a protective layer, a retardation matching layer, and a refractive index-matching layer.

11. The variable transmittance optical stack of claim 1, wherein at least one of the first and second polarizing plates has a thickness ranging from 30 to 200µm.

12. The variable transmittance optical stack of claim 1, wherein the liquid crystal layer comprises one or more types selected from a group consisting of a ball spacer and a column spacer.

13. The variable transmittance optical stack of claim 12, wherein the ball spacer has a diameter ranging from 1 to 10µm.

14. The variable transmittance optical stack of claim 12, wherein an occupancy area of the ball spacer in the liquid crystal layer ranges from 0.01% to 10% of the area of the liquid crystal layer.

15. The variable transmittance optical stack of claim 1, further comprising:
one or more types selected from a group consisting of an alignment film, a pressure sensitive adhesive/adhesive layer, an ultraviolet ray absorption layer, and a hard coating layer.

16. A method for manufacturing the variable transmittance optical stack of any one of claims 1 to 15.

17. A smart window comprising the variable transmittance optical stack of any one of claims 1 to 15.

18. A vehicle in which the smart window of claim 17 is applied to at least one of a front window, a rear window, a side window, a sunroof window, or an inner partition thereof.

19. A window and a door for a building comprising the smart window of claim 17.
